# EUROPÄISCHE PATENTSCHRIFT

(11) **EP 3 643 672 B1**
(45) Veröffentlichungstag und Bekanntmachung des Hinweises auf die Patenterteilung: **21.07.2021**
(21) Anmeldenummer: 19197644.8
(22) Anmeldetag: 17.09.2019
(51) Int. Cl.: B66B 7/06, F16H 7/08

(54) **VERFAHREN UND VORRICHTUNG ZUR MESSUNG DER VORSPANNUNGSKRAFT EINES ANTRIEBSRIEMENS**
METHOD AND DEVICE FOR MEASURING THE BIAS FORCE OF A DRIVE BELT
PROCÉDÉ ET DISPOSITIF DE MESURE DE LA FORCE DE PRÉCONTRAINTE D'UNE COURROIE D'ENTRAÎNEMENT

(30) Priorität: 24.10.2018 DE 102018218161
(43) Veröffentlichungstag der Anmeldung: 29.04.2020
(73) Patentinhaber: ContiTech Antriebssysteme GmbH, 30165 Hannover (DE)
(72) Erfinder: Bartsch-Kuszewski, Dirk, 30165 Hannover (DE)
(74) Vertreter: Continental Corporation

(56) Entgegenhaltungen:
- EP-A1- 1 700 810
- EP-A2- 2 017 594
- WO-A1-2012/031361

## Beschreibung

Die Erfindung betrifft ein Verfahren zur Messung der Vorspannungskraft eines unter Zugspannung stehenden Zugmittels in einem laufenden Zugmitteltrieb, wobei der Zugmitteltrieb mindestens eine Antriebsrolle, Umlenkrollen, ggf. eine Abtriebsrolle und mindestens eine Spannrolle umfasst. Ebenfalls betrifft die Erfindung eine Vorrichtung bzw. Rolle zur Durchführung des Verfahrens So ein Verfahren bzw. Vorrichtung ist aus der WO2010031361A bekannt.

Zugmittel aus elastomerem Material in Form von Antriebsriemen, z.B. Flachriemen, Zahnriemen, Keilriemen, Mehrkeilriemen, Keilrippenriemen etc. werden zur Übertragung von Drehmoment und Antriebsleistung zwischen räumlich auseinanderliegenden Wellen in einer Vielzahl von Anwendungen und Aggregaten genutzt. Solche Zugmitteltriebe oder Riementriebe bestehen in ihrer einfachsten Form aus einer durch einen Motor angetriebenen Antriebsrolle bzw. Antriebsscheibe, einer Abtriebsrolle bzw. Abtriebsscheibe, gegebenenfalls einer oder mehrerer Umlenkrollen sowie einer Spannrolle, welche über einen umlaufend die Rollen mindestens über einen Teilumfang umschlingenden Antriebsriemen miteinander gekoppelt sind. Solche Riementriebe erlauben aufgrund ihres einfachen Aufbaus eine leichte Konstruktion mit vergleichsweise geringem Bauraum und übertragen dabei hohe Antriebsleistungen.

Auf ganz ähnliche Weise funktionieren Zugmittel aus elastomerem Material in Form von Förderbändern, bei denen Schüttgüter auf einem entsprechend breit und stabil als Band ausgebildeten Zugmittel über Antriebsrollen und Umlenkrollen oft über Kilometer transportiert werden. Solche als Förderbänder ausgebildeten Zugmittel dienen beispielsweise zum Transport von Erz oder Kohle in Minen, Förderbetrieben oder Verarbeitungsbetrieben.

Die Vorspannkraft bei einem Antriebsriemen wird typischerweise durch eine separate Spannrolle aufgebracht und in genau definierter Höhe gehalten. Die Bestimmung und Aufrechterhaltung der Vorspannungskraft eines unter Zugspannung stehenden Antriebsriemens ist dabei nicht nur wichtig beim Einbau, sondern auch während des Betriebs. Dabei muss der Spannungszustand des Riemens bereits im Einbauzustand innerhalb bestimmter Grenzen liegen, damit keine zu starke Belastung von Lagern, Antrieben, Motoren, Riemen etc. entsteht, welche zu einem vorzeitigen Ausfall oder zu einer Verkürzung der Lebensdauer führen könnte. Im Betrieb dagegen können Dehnungen und Setzungserscheinungen des Riemens und Verschleißerscheinungen an Bauteilen entstehen, durch die die ursprüngliche Vorspannung reduziert wird und die somit eine Leistungsübertragung beeinflussen könnten.

Hier wird dann eine wiederholte, periodische Überprüfung der Vorspannung erforderlich. Typische Wartungsintervalle in diesem Bereich liegen bei Antriebsriemen zwischen zwei und sechs Monaten. Sinkt die Vorspannung unter einen Grenzwert, so nimmt der Schlupf zwischen Riemen und Scheiben zu und der Antrieb kann nicht mehr effizient betrieben werden.

Die gewärtigen Meßverfahren zur Ermittlung der Vorspannkraft von Zugmitteln wie Antriebsriemen etc. basieren im Wesentlichen auf mechanischen, akustischen und optischen Verfahren, die in aller Regel bei stehendem Antrieb durchgeführt werden. Für diese Verfahren sind spezielle Messgeräte bzw. Vorrichtungen notwendig, wobei die Vorspannung von Riementrieben üblicherweise mit Vorspannungsmessgeräten ermittelt wird, die die Eigenfrequenz eines frei schwingenden Trums messen. Die Vorspannkraft wird dann aus der gemessenen Eigenfrequenz, der Massebelegung des Zugmittels oder Antriebsriemens und der Länge des frei schwingenden Trums berechnet. Alle Messverfahren und -geräte ermitteln diese Frequenz als relevante Messgröße. Dafür stehen verschiedene Sensoren zur Auswahl. Insbesondere die Messung der Luftschallschwingung und optische Sensoren zur Ermittlung der Schwingung der Riemenoberfläche werden genutzt.

Die DE 33 33 710 A1 offenbart ein solches Verfahren, bei dem ein freies Riementrum zur Eigenschwingung angeregt wird und danach eine Messeinrichtung über die Eigenfrequenz die Vorspannkraft berechnet, die dann korrekt eingestellt werden kann.

Nachteilig bei den bekannten Schwingungsmessgeräten ist insbesondere, dass keine kontinuierliche Messung während des Betriebs, d.h. bei umlaufendem Antriebsriemen erfolgen kann. Eine periodische Prüfung bei stehendem Antrieb erzeugt einen erheblichen Wartungsaufwand. Auch kann mit den üblichen Messverfahren keine direkte Messung der tatsächlich vorhandenen Vorspannungskraft beispielsweise an einer Rolle erfolgen.

Für die Erfindung bestand also die Aufgabe, ein einfaches Verfahren anzugeben und eine Vorrichtung bereitzustellen für eine direkte und kontinuierliche im Betrieb erfolgende Messung der tatsächlich im Zugmitteltrieb vorhanden Vorspannungskraft und Zugkraft, ohne das Erfordernis separater, kostenintensive Messgeräte und Messapparaturen.

Gelöst wird diese Aufgabe durch die Merkmale des Hauptanspruchs. Weitere vorteilhafte Ausbildungen sind in den Unteransprüchen offenbart. Ebenfalls ist eine als Rolle in einem Zugmitteltrieb ausgebildete Vorrichtung zur Durchführung des Verfahrens offenbart.

Dabei sind mindestens einer der Rollen des Zugmitteltriebs einerseits eine Einrichtung zur Messung des der Vorspannungskraft proportionalen Anlagedrucks des Riemens an die Rolle sowie andererseits eine Einrichtung zur Erzeugung eines vom Anlagedruck abhängigen elektronischen Signals zugeordnet, wobei das elektronische Signal an eine Steuerungseinrichtung zur Regelung oder Steuerung einer innerhalb des Zugmitteltriebs angeordneten und auf die Spannrolle wirkenden Spannvorrichtung übertragen wird. Durch eine solche Zuordnung der Messeinrichtungen und durch das dadurch sich ergebende Messverfahren kann einerseits eine direkte Messung der auf eine Rolle wirkenden Anlagekraft und der proportional im Zugmittel übertragenden Vorspannungskraft erfolgen und andererseits wird eine kontinuierliche Messung zu jedem beliebigen Zeitpunkt des Betriebs ermöglicht. Zudem können diese direkt ermittelten Messdaten einer Steuerungseinrichtung übertragen werden, die auf eine Spannvorrichtung einwirkt und damit die Vorspannung anpassen kann. Ein solches Messverfahren, welches den üblichen Weg der Messung mit stehendem Antrieb verlässt und eine permanente und kontinuierliche Messung erlaubt, reduziert den Wartungsaufwand und führt dazu, dass die Intervalle für das Wechseln eines Zugmittels, beispielsweise eines Antriebsriemens, wesentlich besser bestimmt werden können.

Der der Vorspannungskraft proportionale Anlagedrucks des Zugmittels an die Rolle wird dabei in einfachster Weise von einer Recheneinrichtung ermittelt, die die geometrischen Verhältnisse im Zugmitteltrieb und den Anlagewinkel des Zugmittels um die Rolle als Parameter berücksichtigt.

Eine vorteilhafte Weiterbildung des Verfahrens besteht darin, dass die Messung des Anlagedrucks des Zugmittels durch eine in der dem Zugmittel zugewandten Anlagefläche mindestens einer der Rollen angeordneten druckempfindlichen Sensoreinrichtung erfolgt. insbesondere in der Kombination mit einer weiteren vorteilhaften Ausbildung des Verfahrens, die darin besteht, dass die Erzeugung eines vom Anlagedruck abhängigen elektronischen Signals durch eine in oder an der mit einer Sensoreinrichtung versehenen Rolle vorgesehenen Einrichtung erfolgt. Auch diese Verfahrensausbildung führt dazu das lediglich an einer Stelle des gesamten Zugmitteltriebs alle Messaufgaben und Maßnahmen zur Weiterleitung der Mess-Signale konzentriert sind und mit beliebigen externen Empfangsgeräten aufgezeichnet, angezeigt oder verarbeitet werden können.

Eine weitere vorteilhafte Ausbildung des Verfahrens besteht darin, dass die Messung des Anlagedrucks durch eine druckempfindliche Sensoreinrichtung in oder an einer Spannrolle oder Umlenkrolle erfolgt. Spann oder Umlenkrollen sind deswegen besonders geeignet, weil hier keine Antriebs- oder Abtriebsmomente zugeordnet sind und diese Rollenarten dann einfach auf Messaufgaben angepasst werden können.

Eine weitere vorteilhafte Ausbildung des Verfahrens besteht darin, dass die Messung des Anlagedrucks durch eine druckempfindliche Sensoreinrichtung in oder an der Oberfläche einer am Zugmittelrücken bzw. Riemenrücken ablaufenden Rolle erfolgt. Eine am Zugmittelrücken ablaufende Rolle bietet deswegen gute Voraussetzungen zur verfahrensgemäßen Messung, da der Zugmittelrücken in aller Regel ohne jegliche Profilierung ausgebildet ist und somit auch die Rollenoberfläche bzw. die Zugmittel-Anlagefläche glatt und ohne Profilierungen ausgebildet ist. In einer solchen Anlagefläche lassen sich die verfahrensgemäßen Messeinrichtungen/Messmittel relativ einfach anordnen.

Eine zur Durchführung des erfindungsgemäßen Verfahrens besonders geeignete Vorrichtung besteht darin, dass die Vorrichtung als Rolle in einem Zugmitteltrieb ausgebildet ist und dass mindestens in Teilbereichen der vom Riemen umschlungenen Anlagefläche bzw. Oberfläche der Rolle Piezoelemente oder elektrisch aktive Polymere als druckempfindliche Sensoreinrichtung angeordnet sind. Durch eine solche Ausbildung wird die Einrichtung zur Messung des Anlagedrucks auch von einer Energiezufuhr unabhängig.

Der notwendige Strom für den Sensorbetrieb wird durch die elektrisch aktiven Polymere oder durch das Piezoelement selbst erzeugt und kann auch noch für die Übertragung von Funksignalen genutzt werden.

Elektrisch aktive Polymere sind etwa als Schichtstruktur ausgebildet, bei der ein nicht leitfähiges Elastomer zwischen zwei leitfähigen Elektroden angeordnet, ist die unter Einfluss von außen wirkender Kräfte ihre elektrischen Kapazitäten bzw. Induktivitäten ändern. Man erhält so Sensoreinrichtungen/Sensorstrukturen, die in beliebigen Formen und Dicken ausgebildet werden können. Mindestens in Teilbereichen der vom Riemen umschlungenen Anlagefläche bzw. Oberfläche der Rolle können solche kapazitive oder resistive Schichten oder Auflagen als druckempfindliche Sensoreinrichtung angeordnet werden. Solche Sensoren/Sensoreinrichtungen sind zwar nicht als stromerzeugende Einrichtungen angelegt, weisen aber einen sehr einfachen Aufbau auf.

Bei einer Rolle für mehrere parallel angeordnete und beabstandet nebeneinander die Rolle umschlingende Zugmittel, besteht eine weitere vorteilhafte Ausbildung darin, dass in der Anlagefläche bzw. Oberfläche der Rolle für jedes der nebeneinander liegenden Zugmittel druckempfindliche Sensoreinrichtungen innerhalb der Zugmittelspuren angeordnet sind. Als "Zugmittelspuren" sind dabei diejenigen Oberflächenbereiche einer solchen Rolle bezeichnet, die, in axialer Richtung betrachtet, parallel nebeneinander angeordnete Ringflächen darstellen, welche durch die gedachten "Ablaufspuren" der Zugmittel auf der Rolle bestimmt werden. Durch eine solche Anordnung von Sensoreinrichtungen ist es möglich, mehrere parallel laufende Zugmitteltriebe in Bezug auf ihre Vorspannung zu überwachen. Man braucht dafür dann nur eine entsprechend ausgebildete Rolle für mehrere Antriebe.

Eine weitere vorteilhafte Ausbildung der Rolle besteht darin, dass die Anlagefläche bzw. Oberfläche der Rolle mit einer oder mehreren die druckempfindliche Sensoreinrichtung schützenden Hülle oder Beschichtung versehen ist. Damit erreicht man, dass auch unter normalem Betrieb und dem dazu gehörigen Verschleiß eine Schädigung der Sensoreinrichtungen mit Sicherheit vermieden wird.

Eine weitere vorteilhafte Ausbildung der in einem Riementrieb befindlichen Rolle besteht darin, dass innerhalb des Rollenkörpers eine in Form einer elektronischen Schaltung ausgebildete Einrichtung zur Erzeugung eines vom Anlagedruck abhängigen elektronischen Signals vorgesehen ist, vorzugsweise verbunden mit einer Einrichtung zur drahtlosen Übertragung des Signals an eine weitere z.B. außerhalb der Rolle befindliche Verarbeitungs- oder Steuerungseinrichtung.

Hier kann z.B. eine Funkeinrichtung zur Übertragung und Darstellung der Signale der Messung per Funksignal an eine Basisstation vorgesehen sein, also die im Rollenkörper befindliche Einrichtung zur Erzeugung eines vom Anlagedruck abhängigen elektronischen Signals etwa per Bluetooth, WLAN o.ä. kommunizieren kann und dadurch nicht unbedingt eine eigene Anzeige benötigt. Die Basisstation kann hier z.B. auch einfach ein Mobiltelefon sein, welches mit einem kleinen Programm, auch "Applikation", auch "App" genannt, die Ergebnisse sichtbar macht, Materialdaten zur Verfügung stellt oder auch bei entsprechender Programmierung eine Empfehlung zum Riemenwechsel ausgeben kann. In solch einer Konstellation können Teile des Mess-Algorithmus, Materialparameter oder geometrische Kenngrößen in der Recheneinheit hinterlegt sein oder drahtlos aus weiteren Rechnern, Speichern oder über das Internet in die Recheneinheit geladen werden. Auf diese Weise lässt sich auch eine Fernüberwachung der Vorspannung bzw. des Anlagedrucks an der Rolle leicht realisieren.

Eine weitere vorteilhafte Ausbildung des Verfahrens besteht darin, dass die Einrichtung zur drahtlosen Übertragung des Signals in Form einer konduktiven Kopplung zwischen benachbarten drehenden Rollenteilen und feststehenden Teilen, vorzugsweise benachbarten Lagerteilen ausgebildet ist. Dadurch ergibt sich eine sehr einfache Form der Übertagung, bei der etwa die Rollenachse einen Koppler bereitstellt und ein vor Kopf der Achse beabstandet angeordneter zweiter, im Lagergehäuse feststehenden Koppler angeordnet ist.

Der der Vorspannungskraft proportionalen Anlagedrucks des Riemens an die Rolle kann dabei auch von der außerhalb der Rolle befindliche Verarbeitungs- oder Steuerungseinrichtung als Recheneinrichtung ermittelt werden.

Die gesamte elektronische Schaltung der Messeinrichtung für den Anlagedruck und die Einrichtung zur Erzeugung eines vom Anlagedruck abhängigen elektronischen Signals kann auf einer in der Rolle angeordneten miniaturisierten Platine angeordnet sein, die auf die Abmessungen der Rolle angepasst ist. Hierdurch lässt sich auch bei der Verwendung von mehrfach parallel angeordneten Riemen bzw. Riementrieben jeder einzelne Antriebsriemen in seiner Vorspannung überwachen.

Eine weitere vorteilhafte Ausbildung der Rolle besteht darin, dass sie als Rückenspannrolle in einem Riementrieb ausgebildet ist, vorzugsweise ausgebildet als zylindrisch-glatte Rückenspannrolle. Wie oben bereits dargestellt, bietet eine am Riemenrücken ablaufende Rolle deswegen gute Voraussetzungen zur verfahrensgemäßen Messung, da der Riemenrücken in aller Regel ohne jegliche Profilierung ausgebildet ist und somit auch die Rollenoberfläche bzw. die Riemen-Anlagefläche glatt und ohne Profilierungen ausgebildet und zur Aufnahme von Mess-Sensorik gut geeignet ist.

Besonders geeignet zur Anwendung des erfindungsgemäßen Verfahrens und zum Einsatz der erfindungsgemäßen als Rolle ausgebildeten Vorrichtung ist ein Riementrieb, bei dem die Antriebsleistung kraftschlüssig und/oder formschlüssig mit Hilfe eines Zugriemens aus elastomerem Material mit eingebetteten und in Längsrichtng des Zugriemens angeordneten oder Zugträgern oder Corden übertragen wird, vorzugsweise mit einem Zahriemen, Keilrippenriemen, Vielkeilriemen, Breitkeilriemen, Flachriemen, Verbundkeilriemen oder Aufzugsriemen. So ist eine erfindungsgemäße Rolle beispielsweise in einem Riementrieb mit einem herkömmlichen Keilrippenriemen einsetzbar, der eine Antriebsrolle, eine Abtriebsrolle, gegebenenfalls Umlenkrollen und eine als Rückenrolle ausgebildete Spannrolle umfasst.

Wie bereits dargestellt, lässt sich das erfindungsgemäße Verfahren und auch die gegebenenfalls fachmännisch angepasste Vorrichtung auch zur Bestimmung der Vorspannung einer Antriebskette oder eines Förderbandes verwenden. Bei allen diesen Anwendungen ist es dann nicht mehr erforderlich, den Stillstand des Antriebs einzuleiten und dann separate umfangreiche Messmittel bereitzustellen, um die Vorspannkraft letztlich doch nur indirekt über eine Schwingungsanalyse zu ermitteln.

Auch mit Zugmitteln in Form von Aufzugsriemen ausgebildete Aufzugssysteme zeigen Konstruktionen, bei denen der Aufzugsriemen mehrfach verschiedene Umlenkrollen und eine Antriebsrolle umläuft. Der Aufzugsriemen bestehen hier aus metallischen Zugmitteln bzw. Zugträgern, die mit einem elastomeren Material ummantelt und dadurch miteinander verbunden sind. Hier ist jedoch eine separate Spannrolle in aller Regel nicht notwendig, da die notwendige Vorspannung durch die Kabine und das Gegengewicht und entsprechend angeordnete Umlenkrollen aufrechterhalten wird.

Nicht zur Ermittlung der Vorspannung - diese ist, wie gesagt, in einem Aufzugssystem durch das Gewicht von Kabine und Gegengewicht vorgegeben - lassen sich aber das erfindungsgemäße Verfahren und eine solche Rolle vorteilhaft in einem Aufzugssystem mit einem Aufzugsgurt nutzen, um die vorhandene Zugspannung im Aufzugsgurt festzustellen, beispielsweise um eine Überlastung der Kabine zu detektieren.

Anhand eines Ausführungsbeispieles soll die Erfindung näher erläutert werden. Es zeigen
- Fig. 1: eine Prinzipskizze eines Riementriebs, bei dem das erfindungsgemäße Verfahren zur Anwendung kommt
- Fig. 2: eine als Spannrolle ausgebildete Vorrichtung zur Durchführung des erfindungsgemäßen Verfahrens.
- Fig. 3: einen als Keilrippenriemen ausgebildeten Antriebsriemen für den Riementrieb gemäß Fig.1 im Querschnitt.

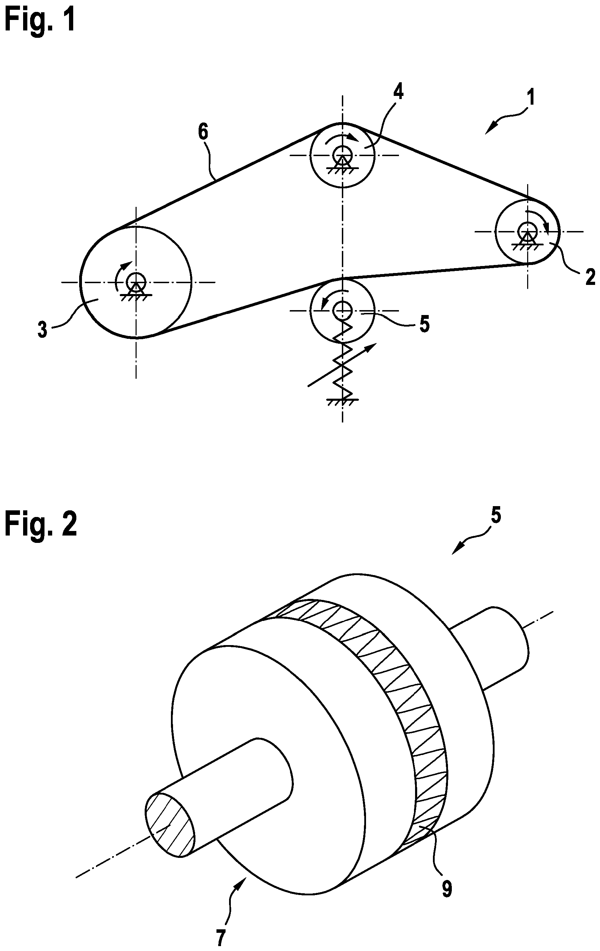

Fig. 1 zeigt anhand einer Prinzipskizze einen als Riementrieb 1 ausgebildeten Zugmitteltrieb mit einer von einem hier nicht näher dargestellten Motor angtriebenen Antriebsrolle 2, einer Abtriebsrolle 3, einer Umlenkrolle 4 und einer als Rückenrolle ausgebildeten Spannrolle 5, bei dem das erfindungsgemäße Verfahren zur Bestimmung der Vorspannungskraft eines unter Spannung stehenden Antriebsriemens 6 zur Anwendung kommt. Die Andruckkraft der Spannrolle 5 ist veränderbar bzw. einstellbar. Mit der Spannrolle 5 ist damit die Vorspannungskraft beim Auflegen eines neuen Zugmittels/Antriebsriemens einstellbar. Ebenso ist die Spannung des Riemens während des Betriebs einstellbar.

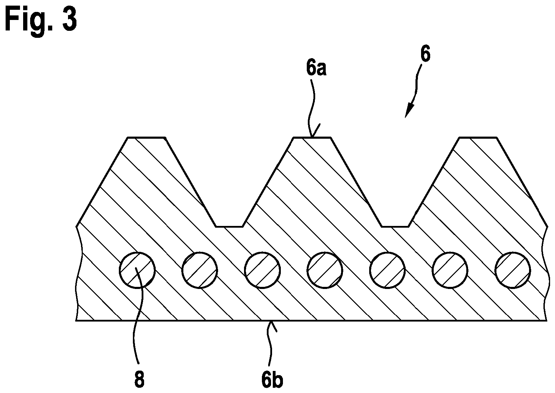

Das Zugmittel bzw. der Antriebsriemen 6 ist als Keilrippenriemen ausgebildet und weist eine profilierten Antriebsseite 6a und einer Rückenseite 6b auf, wie in der Figur 3 prinzipiell und im Querschnitt dargestellt. Der Keilrippenriemen ist mit Zugträgern bzw. Verstärkungselementen 8 ausgebildet, die in Längsrichtung des Keilrippenriemens angeordnet sind.

In Figur 2 zeigt prinzipiell und perspektivisch die als Spannrolle 5 ausgebildeten Vorrichtung zur Durchführung des erfindungsgemäßen Verfahrens. Die Spannrolle 5 liegt an der Rückenseite 6b des Keilrippenriemens 6 an und weist auf ihrer Außenoberfläche bzw. Anlagefläche ein ringförmig um diese Anlagefläche verlaufendes und im Wesentlichen in der Oberfläche der Anlagefläche eingebettetes Piezoelement 9 auf, mit dessen Hilfe ein dem Anlagedruck des Keilrippenriemens auf die Spannrolle proportionaler Strom erzeugt / ermittelt wird.

Innerhalb des Rollenkörpers 7 ist eine hier nicht näher dargestellte Einrichtung in Form einer elektronischen Schaltung zur Erzeugung eines vom Anlagedruck bzw. vom proportionalen Strom des Piezoelements abhängigen elektronischen Signals angeordnet, sowie eine damit verbundene Funkeinrichtung zur Übertragung und Darstellung der Signale der Messung per Funksignal an eine Basisstation.

### Bezugszeichenliste

### (Teil der Beschreibung)

- 1: Riementrieb
- 2: Antriebsscheibe, Antriebsrolle
- 3: Abtriebsscheibe, Abtriebsrolle
- 4: Umlenkrolle
- 5: Spannrolle
- 6: Keilrippenriemen
- 6a: Profilierte Antriebsseite des Keilrippenriemens
- 6b: Glatte Rückseite des Keilrippenriemens
- 7: Rollenkörper
- 8: Zugträger
- 9: Piezoelement

## Patentansprüche

1. Verfahren zur Messung der Vorspannungskraft eines unter Zugspannung stehenden Zugmittels (6) in einem laufenden Zugmitteltrieb, wobei der Zugmitteltrieb mindestens eine Antriebsrolle, Umlenkrollen, ggf. eine Abtriebsrolle (2,3) und mindestens eine Spannrolle (5) umfasst, wobei mindestens eine der Rollen des Zugmitteltriebs eine Einrichtung zur Messung des der Vorspannungskraft proportionalen Anlagedrucks des Zugmittels an die Rolle sowie eine Einrichtung zur Erzeugung eines vom Anlagedruck abhängigen elektronischen Signals zugeordnet sind, wobei das elektronische Signal an eine Steuerungseinrichtung zur Regelung oder Steuerung einer innerhalb des Zugmitteltrieb angeordneten und auf die Spannrolle wirkenden Spannvorrichtung übertragen wird, **dadurch gekennzeichnet, dass** die Messung des Anlagedrucks des Zugmittels durch eine in der dem Zugmittel zugewandten Anlagefläche mindestens einer der Rollen angeordnete druckempfindliche Sensoreinrichtung (9) erfolgt.

2. Verfahren nach Anspruch 1, bei dem die Erzeugung eines vom Anlagedruck abhängigen elektronischen Signals durch eine in oder an der mit einer Sensoreinrichtung versehenen Rolle vorgesehenen Einrichtung erfolgt.

3. Verfahren nach einem der Ansprüche 1 oder 2, bei dem die Messung des Anlagedrucks durch eine druckempfindliche Sensoreinrichtung in oder an einer Spannrolle oder Umlenkrolle erfolgt.

4. Verfahren nach einem der Ansprüche 1 bis 3 bei dem die Messung des Anlagedrucks durch eine druckempfindliche Sensoreinrichtung in oder an der Oberfläche einer am Zugmittelrücken ablaufenden Rolle erfolgt.

5. Als Rolle in einem Zugmitteltrieb (1) ausgebildete Vorrichtung zur Durchführung des Verfahrens nach Anspruch 1 bis 4, **dadurch gekennzeichnet, dass** mindestens in Teilbereichen der vom Zugmittel (6) umschlungenen Anlagefläche bzw. Oberfläche der Rolle (5) Piezoelemente (9) als druckempfindliche Sensoreinrichtung angeordnet sind.

6. Rolle in einem Zugmitteltrieb (1) zur Durchführung des Verfahrens nach Anspruch 1 bis 4, **dadurch gekennzeichnet, dass** mindestens in Teilbereichen der vom Zugmittel (6) umschlungenen Anlagefläche bzw. Oberfläche der Rolle elektrisch aktive Polymere als druckempfindliche Sensoreinrichtung angeordnet sind, vorzugsweise ausgebildet als kapazitive oder resistive Schichten oder Auflagen.

7. Rolle nach Anspruch 5 oder 6, ausgebildet für mehrere parallel angeordnete und beabstandet nebeneinander die Rolle umschlingende Zugmittel, bei der in der Anlagefläche bzw. Oberfläche der Rolle für jedes der nebeneinander liegenden Zugmittel druckempfindliche Sensoreinrichtungen innerhalb der Zugmittelspuren angeordnet sind.

8. Rolle nach einem der Ansprüche 5 bis 7, bei der die Anlagefläche bzw. Oberfläche der Rolle mit einer oder mehreren die druckempfindlichen Sensoreinrichtungen schützenden Hülle oder Beschichtung versehen ist.

9. Rolle nach einem der Ansprüche 5 bis 8, bei der innerhalb des Rollenkörpers (7) eine in Form einer elektronischen Schaltung ausgebildete Einrichtung zur Erzeugung eines vom Anlagedruck abhängigen elektronischen Signals vorgesehen ist, vorzugsweise verbunden mit einer Einrichtung zur drahtlosen Übertragung des Signals an eine weitere außerhalb der Rolle befindliche Verarbeitungs- oder Steuerungseinrichtung.

10. Rolle nach Anspruch 9, bei der die Einrichtung zur drahtlosen Übertragung des Signals in Form einer konduktiven Kopplung zwischen benachbarten drehenden Rollenteilen und feststehenden Teilen, vorzugsweise benachbarten Lagerteilen ausgebildet ist.

11. Rolle nach einem der Ansprüche 5 bis 10, ausgebildet als Rückenspannrolle (5) in einem Zugmitteltrieb (1), vorzugsweise als zylindrisch-glatte Rückenspannrolle (5).

12. Riementrieb (1) mit einer Rolle nach einem der Ansprüche 5 bis 11, bei dem die Antriebsleistung kraftschlüssig und/oder formschlüssig mit Hilfe eines Zugriemens aus elastomerem Material mit eingebetteten und in Längsrichtung des Zugriemens angeordneten Zugträgern oder Corden übertragen wird, vorzugsweise mit einem Zahnriemen, Keilrippenriemen, Vielkeilriemen, Breitkeilriemen oder Flachriemen.

13. Förderband mit einer Rolle nach Anspruch 5 bis 11.

14. Verwendung des Verfahrens nach einem der Ansprüche 1 bis 4 zur Messung der Zugspannung eines Aufzuggurtes in einem laufenden Aufzugsantrieb zur Detektion einer Gewichtsüberlastung der Kabine.

15. Verwendung Rolle nach einem der Ansprüche 5 bis 11 in einem Aufzugssystem zur Messung der Zugspannung eines Aufzuggurtes in einem laufenden Aufzugsantrieb.

## Claims

1. Method for measuring the pretensioning force of a traction means (6) under tensile stress in a running traction drive, wherein the traction drive comprises at least one drive roller, deflecting rollers, possibly a driven roller (2, 3) and at least one tensioning roller (5), wherein at least one of the rollers of the traction drive is assigned a device for measuring the contact pressure, proportional to the pretensioning force, of the traction means against the roller and is assigned a device for generating an electronic signal dependent on the contact pressure, wherein the electronic signal is transmitted to a control device for the closed-loop or open-loop control of a tensioning device which is arranged within the traction drive and acts on the tensioning roller, **characterized in that** the measuring of the contact pressure of the traction means is performed by a pressure-sensitive sensor device (9) arranged in the contact area, facing the traction means, of at least one of the rollers.

2. Method according to Claim 1, in which the generation of an electronic signal dependent on the contact pressure is performed by a device provided in or on the roller provided with a sensor device.

3. Method according to either of Claims 1 and 2, in which the measuring of the contact pressure is performed by a pressure-sensitive sensor device in or on a tensioning roller or deflecting roller.

4. Method according to one of Claims 1 to 3, in which the measuring of the contact pressure is performed by a pressure-sensitive sensor device in or on the surface of a roller running on the back of the traction means.

5. Device, designed as a roller in a traction drive (1), for carrying out the method according to Claims 1 to 4, **characterized in that** piezo elements (9) are arranged as the pressure-sensitive sensor device at least in subregions of the contact area or surface of the roller (5) that is wrapped around by the traction means (6).

6. Roller in a traction drive (1) for carrying out the method according to Claims 1 to 4, **characterized in that** electrically active polymers, preferably formed as capacitive or resistive layers or coatings, are arranged as the pressure-sensitive sensor device at least in subregions of the contact area or surface of the roller that is wrapped around by the traction means (6).

7. Roller according to Claim 5 or 6, designed for a number of traction means which are arranged in parallel and, spaced apart from one another, wrap around the roller, in which pressure-sensitive sensor devices are arranged in the contact area or surface of the roller for each of the traction means lying next to one another, within the traction means traces.

8. Roller according to one of Claims 5 to 7, in which the contact area or surface of the roller is provided with one or more enclosure or coating protecting the pressure-sensitive sensor devices.

9. Roller according to one of Claims 5 to 8, in which a device taking the form of an electronic circuit for generating an electronic signal dependent on the contact pressure is provided within the roller body (7), preferably connected to a device for the wireless transmission of the signal to a further processing or controlling device located outside the roller.

10. Roller according to Claim 9, in which the device for the wireless transmission of the signal takes the form of a conductive coupling between adjacent rotating roller parts and fixed parts, preferably adjacent bearing parts.

11. Roller according to one of Claims 5 to 10, formed as a back tensioning roller (5) in a traction drive (1), preferably as a cylindrically smooth back tensioning roller (5).

12. Belt drive (1) with a roller according to one of Claims 5 to 11, in which the drive power is non-positively and/or positively transmitted with the aid of a traction belt of elastomeric material with embedded traction members or cords arranged in the longitudinal direction of the traction belt, preferably with a toothed belt, V-ribbed belt, multi V-belt, wide V-belt or flat belt.

13. Conveyor belt with a roller according to Claims 5 to 11.

14. Use of the method according to one of Claims 1 to 4 for measuring the tensile stress of a lift belt in a running lift drive for the detection of a weight overload of the cabin.

15. Use of a roller according to one of Claims 5 to 11 in a lift system for measuring the tensile stress of a lift belt in a running lift drive.

## Revendications

1. Procédé pour la mesure de la force de précontrainte d'un moyen de traction (6) se trouvant sous une contrainte de traction dans un mécanisme d'entraînement à moyen de traction circulant, le mécanisme d'entraînement à moyen de traction comportant au moins un rouleau d'entraînement, des rouleaux de déviation, éventuellement un rouleau entraîné (2, 3) et au moins un rouleau tendeur (5), un appareil pour la mesure de la pression d'application, proportionnelle à la force de précontrainte, du moyen de traction sur le rouleau, ainsi qu'un appareil pour la génération d'un signal électronique dépendant de la pression d'application étant associés à au moins un des rouleaux du mécanisme d'entraînement à moyen de traction, le signal électronique étant transmis à un appareil de commande pour la régulation ou la commande d'un dispositif tendeur agencé au sein du mécanisme d'entraînement à moyen de traction et agissant sur le rouleau tendeur, **caractérisé en ce que** la mesure de la pression d'application du moyen de traction a lieu par un appareil capteur sensible à la pression (9) agencé dans la surface d'application, tournée vers le moyen de traction, d'au moins un des rouleaux.

2. Procédé selon la revendication 1, dans lequel la génération d'un signal électronique dépendant de la pression d'application a lieu par un appareil prévu dans ou sur le rouleau muni d'un appareil capteur.

3. Procédé selon l'une quelconque des revendications 1 ou 2, dans lequel la mesure de la pression d'application a lieu par un appareil capteur sensible à la pression dans ou sur un rouleau tendeur ou un rouleau de déviation.

4. Procédé selon l'une quelconque des revendications 1 à 3, dans lequel la mesure de la pression d'application a lieu par un appareil capteur sensible à la pression dans ou sur la surface d'un rouleau se dévidant sur le dos du moyen de traction.

5. Dispositif configuré en tant que rouleau dans un mécanisme d'entraînement à moyen de traction (1), pour la réalisation du procédé selon les revendications 1 à 4, **caractérisé en ce que** des éléments piézoélectriques (9) sont agencés en tant qu'appareil capteur sensible à la pression au moins dans des zones partielles de la surface d'application ou surface, enlacée par le moyen de traction (6), du rouleau (5).

6. Rouleau dans un mécanisme d'entraînement à moyen de traction (1) pour la réalisation du procédé selon les revendications 1 à 4, **caractérisé en ce que** des polymères électriquement actifs en tant qu'appareil capteur sensible à la pression sont agencés au moins dans des zones partielles de la surface d'application ou surface, enlacée par le moyen de traction (6), du rouleau, de préférence configurés en tant que couches ou applications capacitives ou résistives.

7. Rouleau selon la revendication 5 ou 6, configuré pour plusieurs moyens de traction agencés en parallèle et espacés les uns à côté des autres, enlaçant le rouleau, dans lequel des appareils capteurs sensibles à la pression sont agencés au sein des pistes de moyen de traction dans la surface d'application ou surface du rouleau pour chacun des moyens de traction situés les uns à côté des autres.

8. Rouleau selon l'une quelconque des revendications 5 à 7, dans lequel la surface d'application ou surface du rouleau est munie d'un ou de plusieurs enrobages ou revêtements protégeant les appareils capteurs sensibles à la pression.

9. Rouleau selon l'une quelconque des revendications 5 à 8, dans lequel un appareil configuré sous la forme d'un circuit électronique pour la génération d'un signal électronique dépendant de la pression d'application est prévu au sein du corps de rouleau (7), de préférence relié avec un appareil pour la transmission sans fil du signal à un appareil de traitement ou de commande supplémentaire se trouvant à l'extérieur du rouleau.

10. Rouleau selon la revendication 9, dans lequel l'appareil pour la transmission sans fil du signal est configuré sous la forme d'un couplage conducteur entre des parties de rouleau rotatives et des parties fixes voisines, de préférence des parties de palier voisines.

11. Rouleau selon l'une quelconque des revendications 5 à 10, configuré en tant que rouleau tendeur de dos (5) dans un mécanisme d'entraînement à moyen de traction (1), de préférence en tant que rouleau tendeur de dos cylindrique lisse (5).

12. Mécanisme d'entraînement à courroie (1) muni d'un rouleau selon l'une quelconque des revendications 5 à 11, dans lequel la puissance d'entraînement est transmise par accouplement de force et/ou par accouplement de forme à l'aide d'une courroie de traction en matériau élastomère munie de renforts de traction ou de cordons incorporés et agencés dans la direction longitudinale de la courroie de traction, de préférence muni d'une courroie dentée, d'une courroie à nervures cunéiformes, d'une courroie cannelée, d'une courroie trapézoïdale large ou d'une courroie plate.

13. Bande transporteuse munie d'un rouleau selon les revendications 5 à 11.

14. Utilisation du procédé selon l'une quelconque des revendications 1 à 4 pour la mesure de la contrainte de traction d'une sangle d'ascenseur dans un entraînement d'ascenseur circulant pour la détection d'une surcharge en poids de la cabine.

15. Utilisation d'un rouleau selon l'une quelconque des revendications 5 à 11 dans un système d'ascenseur pour la mesure de la contrainte de traction d'une sangle d'ascenseur dans un entraînement d'ascenseur circulant.
